# EUROPEAN PATENT APPLICATION

(11) **EP 3 745 777 A1**
(43) Date of publication of application: **02.12.2020**
(21) Application number: 19190547.0
(22) Date of filing: 07.08.2019
(51) Int. Cl.: H04W 40/12, H04L 12/721, H04W 40/16

(54) **A METHOD AND DEVICE FOR COMMUNICATING PROCESS INFORMATION IN WIRELESS NETWORK OF INDUSTRIAL PLANT**

(30) Priority: 31.05.2019 IN 201941021801
(71) Applicant: ABB Schweiz AG, 5400 Baden (CH)
(72) Inventor: Tandur, Deepaknath, 560068 Bangalore, Karnataka (IN); Varghese, Anitha, 560035 Bangalore, Karnataka (IN); Rath, Anand, 751019 Orissa (IN)
(74) Representative: Vossius & Partner Patentanwälte Rechtsanwälte mbB

(57) **Abstract**

The present invention relates to a method for communicating process information in wireless network of industrial plant. The wireless network comprises plurality of access nodes connected with at least one gateway, where each gateway device is connected with server. Each access node is associated with field device of industrial plant. The method includes calculating first rank for each routes at time instance based on information associated with packet transfer, packet success probability, signal strength associated with each access nodes and noise data. A second rank for each of route in wireless network is received from server. The second rank is determined by server over period of time. An optimal rank is estimated for each route based on first rank and the second rank. Thereafter, based on optimal rank of each route, an optimal route is determined for communicating the process information from the associated field device to the server.

## Description

### TECHNICAL FIELD

The present disclosure relates in general to communication in industrial plant. More particularly, the present disclosure relates to a method for communicating process information in wireless network of industrial plant.

### BACKGROUND

The use of wireless communication in industrial plant is well established. Typically, an industrial plant comprises a wide variety of industrial devices/equipment connected over different networks. For example, the industrial plant can have connectivity at component, system, and / or network level, over one or more of, but not limited to, a plant network, a control network, a field network, and an external network (e.g. cloud, internet etc.).

The wireless communication network (for example., a mesh network) in the industrial plant consists of an array of nodes connected wirelessly with gateways. There can be one or multiple gateways, which can serve multiple nodes and thereby associated field devices. Thus, a field device (via a node) can access the network and communicate with a remote device (e.g. plant server, control system etc.) in the industrial plant through a gateway directly (wirelessly), or by hopping to the gateway through another node. The field devices include such as, sensors, detector, actuators, intelligent electronic devices (IEDs), and other equipment devices. The nodes include for example, routers and the like. These nodes communicate with one another for delivering information or process data from one or more field devices on the wireless network.

In the wireless network each node can directly or indirectly communicate with every other node and collaborate for transmission and delivery of data packets. The sequence of nodes that a data packet traverses from a source to a destination constitutes a path or route. Typically, routing protocols are used to identify and select the route for traffic routing. Generally, the routing protocols implemented on the nodes build routing tables which contain possible routes and rules for data packet transmission in the network. Among the multiple paths available between a source node and a destination node, specific routes are selected through implementation of a routing protocol and rules listed therein.

Typically, the routing protocol attempts to set up a best possible route between the nodes in order to establish a reliable path from each node to the gateway of the network. The best possible route may correspond to, for instance, the route that optimizes key chosen performance parameters such as packet delay delivery, packet success probability, throughput, network load, packet loss ratio, routing overhead, etc. Currently, decisions to select the best possible route around a node is often taken during a short time interval and these are typically local in nature. Such decisions may not take into account any unbalanced traffic distribution and congestion across nodes which may occur along the route or anticipated at any given time point. That is, the route decisions in current systems do not consider performance impact that a possible route may result on neighbours or even over the entire network. For example, a route which is selected based on data monitored over the short time interval may look perfectly healthy during the decision time. However, such a route may not be stable during the operation period due to the presence of hidden nodes or traffic variations and interference.

Thus, such interference and bottlenecks can result in conditions such as, packet dropping and MAC misbehaviour, which may be missed out due to the decision taken based on dynamic data measured in short durations. As a result, some nodes may under-perform, and this may trigger for search and establishment of newer and better routes around them. Such characteristics are even more prominent in large industrial networks and can result in big parts of the network becoming unstable with poor performance.

### SUMMARY

The present disclosure relates to communication of process information in a wireless network of an industrial plant. The wireless network can be an industrial mesh network. The wireless network comprises a plurality of access nodes communicatively connected with at least one gateway of a plurality of gateways. Each gateway is connected with a server. Various field devices access the wireless network through the plurality of access nodes. Accordingly, each access node each access node is associated with a field device of the industrial plant.

The present invention discloses a method for communicating process information in a wireless network of the industrial plant. The method is implemented by each of the plurality of access nodes.

The method comprises calculating a first rank for each of one or more routes at a time instance based on information associated with packet transfer, packet success probability, signal strength associated with each access nodes and noise data. The method also comprises receiving a second rank for each of the one or more routes in the wireless network from the server. The second rank is determined by the server based on parameters associated with packet delivery rate, traffic load on each route and at associated neighbouring access node, number of neighbouring access nodes, channel level data, interference levels and route condition monitored over a period of time in the wireless network. Each access node device comprises an input interface, for receiving information, such as, the second rank, from the server.

The method also comprises estimating an optimal rank for each of the one or more routes based on the corresponding first rank and the second rank. The estimation of the optimal rank is performed with a processor of the access node device. Thereafter, the method comprises determining an optimal route for communicating the process information from the associated field device to the server based on the estimated optimal rank of each of the one or more routes.

In an embodiment, the optimal rank is a function of the first rank and the second rank, and a confidence factor associated with the first rank and the second rank for each route. The confidence factor is determined based on time, a pattern of quality of each route and success associated each route for data communication.

In an embodiment, estimating the optimal rank for each of the one or more routes comprises assigning weights for the first rank and the second rank associated with each access node based on number of data monitored over the period of time in the wireless network.

In an embodiment, the method further comprises providing information about the optimal route and the optimal rank for each of the one or more routes to the server.

In an embodiment, the method further comprises providing the information associated with calculation of the first rank to the server for the time instance.

In an embodiment, the method further comprises generating one or more new routes based on the estimated optimal rank.

In an embodiment, the information associated with the calculation of the first rank for the one or more routes is monitored periodically by corresponding access node.

### BRIEF DESCRIPTION OF THE DRAWINGS

The novel features and characteristic of the disclosure are set forth in the appended claims. The disclosure itself, however, as well as a preferred mode of use, further objectives and advantages thereof, will best be understood by reference to the following detailed description of an illustrative embodiment when read in conjunction with the accompanying figures. One or more embodiments are now described, by way of example only, with reference to the accompanying figures wherein like reference numerals represent like elements and in which:
**Figure 1A** shows a system with a wireless network of an industrial plant, in accordance with an embodiment of the invention;
**Figure 1B** shows an exemplary cluster of access nodes in accordance with an embodiment of the invention;
**Figure 2** shows a block diagram of an access node device for communicating process information in a wireless network of industrial plant, in accordance with an embodiment of the invention;
**Figure 3** is a flowchart of a method for communicating process information in a wireless network of industrial plant, in accordance with an embodiment of the invention;
**Figure 4A** shows an example table for calculating first rank, in accordance with an embodiment of the invention;
**Figure 4B** shows an example table of second rank, in accordance with an embodiment of the invention;
**Figure 4C** shows an example table for calculating optimal rank, in accordance with an embodiment of the invention; and
**Figure 5A and Figure 5B** show exemplary representations of communicating process information through optimal route, in accordance with an embodiment of the invention.

### DETAILED DESCRIPTION

The present disclosure is related to wireless network in industrial plants such as, but not limited to, oil plants / rigs, mining plants, steel plants, paper plants, chemical plants, power plants, and wind / solar power generation plants. Such industrial plants may have connectivity at one or more network levels. The connectivity may be enabled through one or more networks including, but not limited to, a plant network, a control network, a field network, and an external network (e.g. cloud, internet etc.). The invention is specifically in relation to communication of process information in the wireless networks in such industrial environments. In an embodiment, the wireless network may be an industrial mesh network. Traditionally, decision for a route selection for data transfer is limited to utilizing information gathered over a very short period of time. Thus, such decisions may not consider performance impact on neighbouring route and over the entire network. The present invention enables communication of process information in the industrial plant using an optimal route which is selected based on analysis of data gathered periodically from each node of the wireless network over a period of time along with dynamic network data gathered over a short period of time.

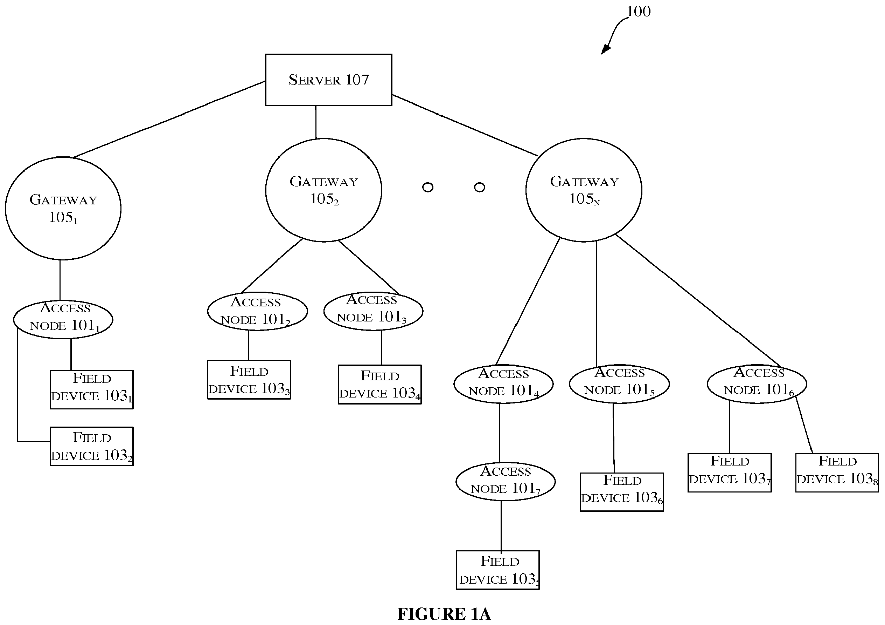

**Figure 1A** shows a system with a wireless network of an industrial plant, in accordance with an embodiment of the invention.

Figure 1A shows a system 100 which comprises a wireless network of an industrial plant. The wireless network comprises a plurality of gateways (105₁, 105₂ .............105_{N}, also referred as at least one gateway (105)), a plurality of access node devices (101₁, 101₂ ...101_{N}) and a plurality of field devices (103₁, 103₂ ...103_{N}). In an embodiment, the at least one gateway 105 may be connected on a wired network and a wireless network. In an embodiment, the at least one gateway 105 may be a gateway device which provides an interface between a wireless network protocol and a wired or another wireless network protocol. In an embodiment, the wired network may be Ethernet or other such high-speed networks, and the at least one gateway 105 may be connected to different networks inside / external to the plant through the wired network, and other components connected to the wired network.

Generally, multiple access node devices may be served by one gateway. For example, the gateway 105₁ serves one access node device, namely, the access node device 101₁. Whereas, the gateway 105₂ serves two access node devices namely, the access node device 101₂ and the access node device 101₃. Each of the plurality of access node devices 101 are connected wirelessly in the network. For example, an access node device of the plurality of access node devices 101 may be a wireless router which provides wireless connectivity to devices connected to it. A person skilled in the art would understand that the access node may include any other types of device, not mentioned explicitly in the present disclosure. An access node device of the plurality of access node devices 101 may connect with the gateway directly (such as access node device 101₁, 101₂ etc.), or by hopping through one or more access node devices (such as 101₄). Typically, the plurality of access node devices 101 may be wirelessly connected to different gateway of at least one gateway 105, or access node devices according to the network conditions.

Further, each of the field devices 103 may be connected to an access node device of the plurality of access node devices 101. In an embodiment, the field device may include, sensors, detector, actuators, intelligent electronic devices (IEDs), and other equipment / devices and the like. The plurality of field devices 103 may be in communication with one or more systems / server/equipment in the plant via the access node they are connected to. Each access node device of the plurality of access node devices 101 may transfer the data packets associated with the process information through one or more routes, which may depend on the number of hops. Based on the connection between the access node devices and the gateways in the wireless network, one or more clusters is formed in the network.

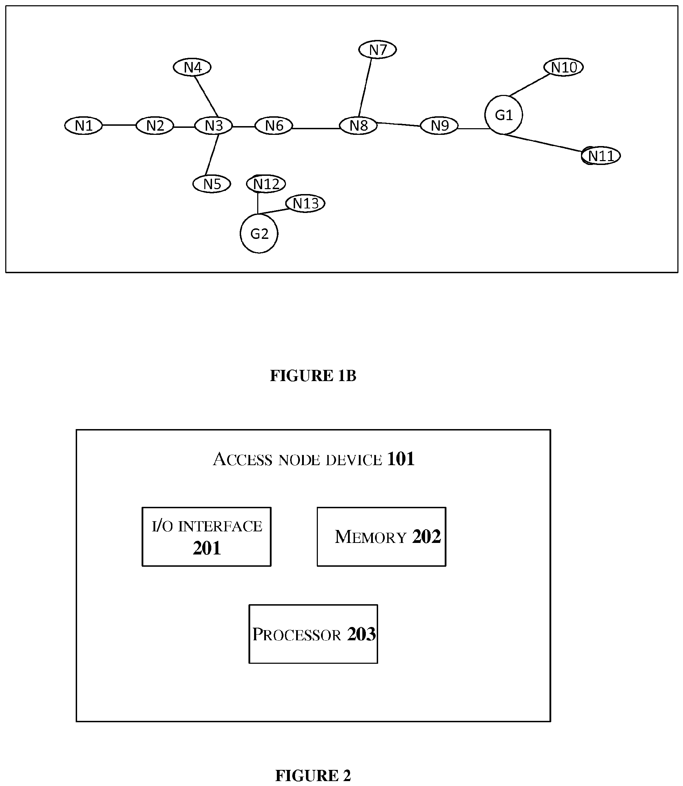

**Figure 1B** shows an exemplary cluster of access nodes in accordance with an embodiment of the invention. The following example gives an illustration of the above steps. Figure 1B shows two cluster structures. In an embodiment, the clusters, for instance, may be part of the network of access node devices involved with the transmission of process information in the industrial plant. As shown in Figure 1B, an upper cluster constitutes of eleven access node devices (N1-N11) and a gateway G1. In an embodiment, each access node devices may be identified based on unique identifier labels. Further, the lower cluster comprises two access node devices (N12-N13) and one gateway G2. Each access node devices may communicate with each and transmit data packets to the at least one gateway 105 which may send it further to the server 107. The selection of the route for data transfer is based on analysis of the parameters associated with the wireless network. In the present invention, each of the access node devices 101 determine an optimal route for the communication of the process information from associated field devices to the server 107. For example, consider the field device to be a transformer component in substation in industrial plant for determining the health and performance of the transformer.

To monitor the health and performance of the transformer, data associated with each of the component is transmitted through the access node devices to the gateway and to the centralized location for analysis. The analysis may consider various components in the wireless network of the substation and the correlation of their function around, for instance, and error or fault condition. If the outcome of the analysis is a recommendation for addition of new components or IEDs onto the substation for monitoring and control, the system offers the flexibility by determining optimal route considering the new component based on parameters of each access nodes monitored over different instance of time.

**Figure 2** shows a block diagram of an access node device for communicating process information in a wireless network of industrial plant, in accordance with an embodiment of the invention.

Figure 2 is a simplified block diagram of an access node device 101. As shown the access node device 101 comprises an input interface 201, a memory 202 and a processor 203.

The input interface may include I/O's of the access node device 101, which connect the access node device 101 with the at least one gateway 105 (i.e. over the network), the server 107, a field device of the plurality of field devices 103 and other access nodes. Thus, the access node device 101 communicates with other network components through the I/O's. The access node device 101 receives information from the server 107 through the I/O's.

The information received from the server 107 may be stored in the memory 202. The information received from the server 107 may be associated with one or more possible routes for process communication in the wireless network.

The processor 203 may at periodically monitor information associated with data packet transfer, packet success probability, signal strength and noise data associated with each route associated with the access node device 101. At an instance of time, the processor 203 may calculate a first rank for each of one or more routes which may be considered by the access node device 101 for the process communication based on the monitored information. In an embodiment, the instance of time may depend on a request from the field device associated with the access node device 101. The processor 203 may estimate estimating the optimal rank for each of the one or more routes by using the first rank corresponding with each route and a second rank of each of the one or more routes received from the server 107. Accordingly, based on the optimal rank, the processor 203 determines an optimal route for communicating the process information from the associated field device to the server 107.

The second rank for each of the one or more routes is determined by the server 107 based on parameters associated with packet delivery rate, traffic load on each route and at associated neighbouring access node, number of neighbouring access nodes, channel level data, interference levels and route condition monitored over a period of time in the wireless network. Specifically, the server 107 learns about each access node of the plurality of access node devices 101 and each route in the wireless network by continuously observing and understanding them over time. Thus, based on the learning, the server 107 determines the second rank for each route in the wireless network. Thus, over the period of time (for example, weeks or months), the server 107 may understand and learn nearly all pattern of quality of each route for data communication in the wireless network.

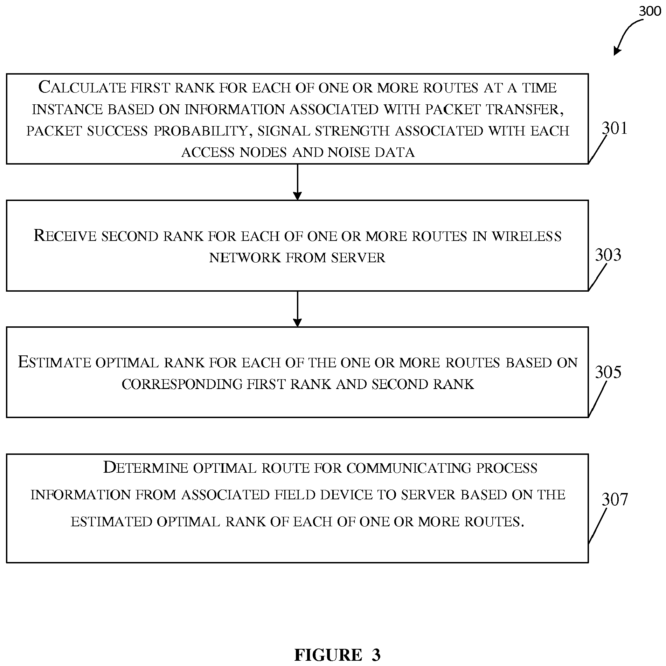

**Figure 3** is a flowchart of a method for communicating process information in a wireless network of industrial plant, in accordance with an embodiment of the invention.

Referring now to Fig. 3, which is a flowchart of a method for communicating process information in a wireless network of industrial plant. Various steps of the method may be performed by the access node device 101, or at least in part by the access node device 101, wherein some steps may be performed by the server 107 and the results communicated to the access node device 101.

At 301, the first rank is calculated by the processor 203 for each of the one or more routes which may be between/from the access node device 101 and the at least one gateway 105 at the time instance. In an embodiment, the time instance may be a short duration. The first rank is calculated based on the information associated with the data packet transfer, packet success probability, signal strength associated with each access nodes and noise data. The information is monitored periodically by the corresponding access node device 101. The information associated with the packet success probability may include packet success rate in downlink and uplink. Alternatively, the first rank for each of the one or more routes may be calculated by the server 107. In such case, the information associated with the calculation of the first rank is provided to the server 107 for the time instance.

In an embodiment, the time instance for sending the information may be set by an engineer or operator or may also be automated. The server 107 may update its historical database with the latest information received from each of the access node device 101. In one embodiment, the access node device 101 comprises implementation of various functions for calculating the first rank. Essentially, the function may take as input the information monitored by the access node device 101 periodically for each route. In an embodiment, the first rank table calculated for each route highlights weight of various route in the wireless network.

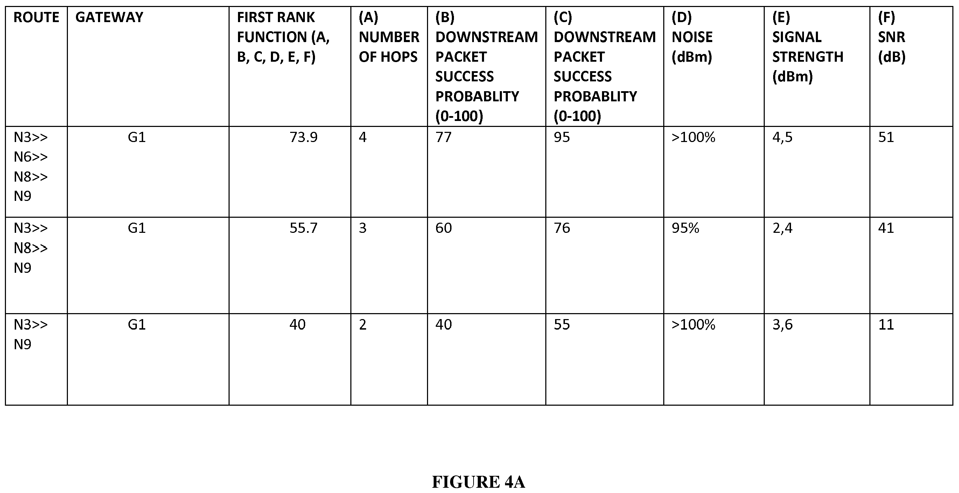

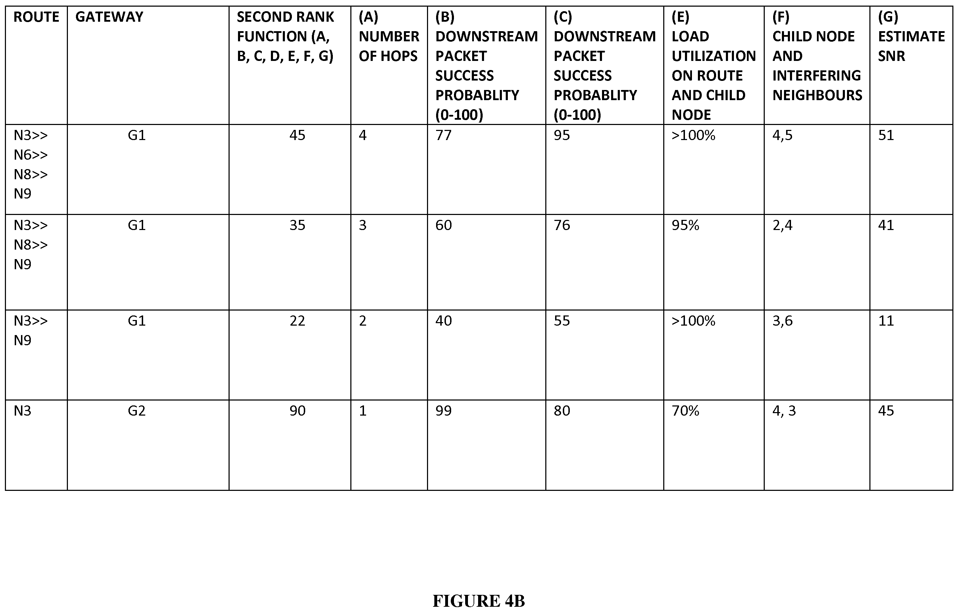

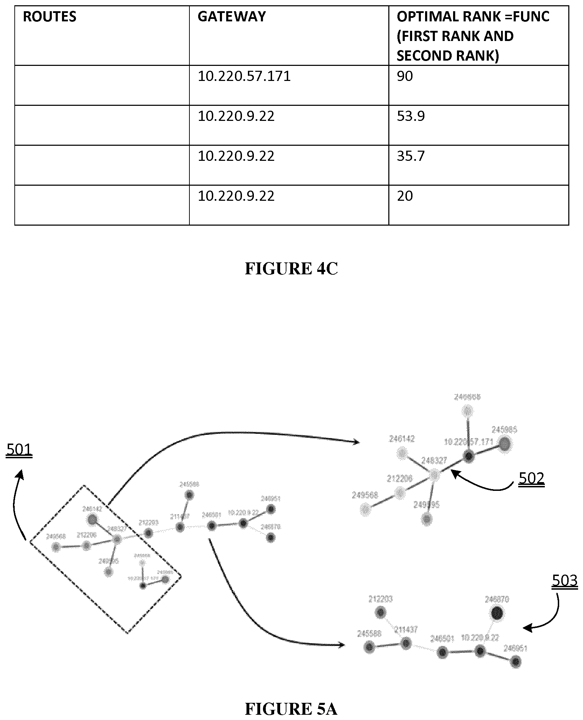

**Figure 4A** shows an example table for calculating first rank, in accordance with an embodiment of the invention. Particularly, Figure 4 is a table which shows the first rank calculated for an access node device (N3) (as represented in Figure 1B) which exists in cluster 1. The first rank is a function of data packet transfer, packet success probability, signal strength associated with each access nodes and noise data. Thus, in this case, the first rank for the access node device (N3) is a function of parameters (A-F) as indicated in column four through nine, which is obtained for the one or more routes measured over the short period of time. For instance, for the first route involving transmission of process information along the access node device (N3), N6, N8, and N9 to the gateway (G1), the first rank is estimated to be 73.9 based on the information of parameters (A-F). Particularly, column A for the first route estimates the number of hops that the first route involves for the process information transmission. Data packet associated with the process information hops from one (N3-N6-N8-N9) before reaching the gateway (G1).

The column B lists the estimate of downstream packet success probability for the first route as "77". This indicates the success probability for transmission of data packets along the first route going from N1 to the G1. Similarly, the upstream packet success probability is estimated to be "95". This indicates the success probability for transmission of data packets along the first route going from the G1 to the N1. In an embodiment, the probability may be estimated from a collection of historical data and trend of data packet transmissions. The column D shows the noise associated with the channel in the G1 for the process information transmission. A strength of the noise may be tabulated in dBm (decibels relative to a milliwatt). The column E provides an estimate for the wireless signal strength associated with the first route for data packet transmission. The column F shows the estimate of the ratio of signal and noise energy levels in the communication channel measured in decibels (dB).

At block 303, the second rank for each of the one or more routes in the wireless network is received from the server 107. The server 107 may determine the second rank is based on parameters such as, packet delivery rate, traffic load on each route and at associated neighbouring access node, number of neighbouring access nodes, channel level data, interference levels and route condition monitored over the period of time in the wireless network.

**Figure 4B** shows an example table of second rank, in accordance with an embodiment of the invention. Particularly, Figure 4b is a table which shows the second rank calculated for an access node device (N3) (as represented in Figure 1B) which exists in cluster 1. Specifically, the second rank is a function of parameters such as, packet delivery rate, traffic load on each route and at associated neighbouring access node, number of neighbouring access nodes, channel level data, interference levels and route condition. Thus, in this case, the second rank for the access node device (N3) is a function of parameters as indicated in column (A-G), which is obtained for the one or more routes measured over the period of time. Essentially, the second rank may also consider all possible child node connections as well as expected load for each route.

In Figure 4B, the column A corresponds to the description of intermediate nodes which may be involved in transmitting of the data packets associated with process information to the at least one gateway 105. The second column B indicates a terminating gateway where all the data packets eventually reach before reaching the server 107. The column C lists the determined second rank. In an embodiment, the server 107 comprises implementation of various functions for calculating the second rank. For instance, considering the first route involving transmission of data packets along access node device N3, N6, N8 and N9 to the gateway G1, the second rank is estimated to be "45". column A shows the number of hops that the routes involves for the data packet transmission. That is, the data packet hops from one node to the next before reaching to the gateway.

In the first route, there are four hops corresponding to four access nodes devices. Column B represents estimate of downstream packet success probability, which for the first route is 77. This is the success probability for transmission of data packets along the first route going from access node device N3 to the gateway G1. Similarly, column C represents the estimate obtained for the upstream packet success probability, which in this case is 95. This is the success probability for transmission of data packets along the first route going from the gateway G1 to the access node device N3. In an embodiment, the probability may be estimated from a collection of historical data and trend of data packet transmissions. The column D shows the channel number used for the gateway for the data transmission.

For the first route, the channel is set for 6. The column E provides an estimate for the load utilization on the route. In an embodiment, the load utilization is estimated using the ratio of the amount of data traffic traversing the route and the route capacity. Further, the column F lists the number of estimated children nodes, and interfering neighbours, which is 4 and 5 for the first route. The column G represents the estimate of the ration of signal and noise energy levels in the communication channel measured in decibels (dB). Thus, the table in Figure 4b shows that best route connection for the access node device N3 is a direct hop connection to the gateway G1, which is calculated based on historical data as well as the current load situation.

In an embodiment, various inferences may be drawn about the wireless network based on the information collected at different points in history. Consider a wireless network to have neighborhoods. A neighborhood can be seen as a self-contained sub-network which does not interfere or share traffic with any other neighborhood. Thus, a neighborhood has clusters of access nodes that are independent of other clusters / neighborhoods. In other words, a neighborhood has one or more clusters that are related (i.e. have common access nodes, or hopping nodes (nodes moving between clusters), or communication between cluster heads etc.). A cluster has a cluster head (gateway) and one or more branches, wherein each branch has one or more access nodes. Inferences can be drawn about the neighborhood structure at different points in history. The neighborhood structure can be considered according to a network hierarchy that is for example from a router, a branch, a cluster, a neighborhood and then as the complete network itself. The inferences are made according to analysis of the information collected for the access nodes and / or gateways.

At block 305, the optimal rank for each of the one or more routes is estimated based on the corresponding first rank and the second rank. Essentially, the optimal rank is a function of the first rank and the second rank, and a confidence factor associated with the first rank and the second rank for each route. The function may be, for instance, but not limited to, an averaging routine which implements a weighted average of the first rank and the second rank, an objective function implemented as a machine learning model for optimization with respect to the selected parameters and the like. The confidence factor for each route is received from the server 107 along with the second rank. In an embodiment, the confidence factor is determined based on time, a pattern of quality of each route and success associated each route for data communication.

The first rank and the second rank may be weighted an adaptive manner. For instance, the first rank and the second rank associated with each access node may be assigned with weights based on the number of parameters monitored over the period of time in the wireless network. **Figure 4C** shows an example table for calculating optimal rank, in accordance with an embodiment of the invention. Column one in Figure.4c corresponds to the description of the access nodes which make up the route for data packet transfer. A second column represents the terminating gateway to which the data packets reach as their destination. Further, the third column represent outcome of the function which combines the first rank and the second rank. The table in the Figure 4c represents the optimal rank in a descending order. The table in Figure 4c establishes that for the data transmission from the access node device N3, the highest ranked route, and therefore the optimal route, is through the gateway G2.

At block 307, the optimal route for communicating the process information from the associated field device to the server 107 is determined based on the optimal rank of each of the one or more routes. In an embodiment, based on the estimated optimal rank, the method includes generating one or more new routes. In Figure 4c, based on the optimal rank, the optimal route for the data transmission from the access node device N3 is through the gateway G2. Thus, based on the optimal rank, a new cluster structure is created which is modification of the clusters as depicted in Figure 1B. The new cluster representing the one or more new routes may result in an improved network performance towards the process information communication.

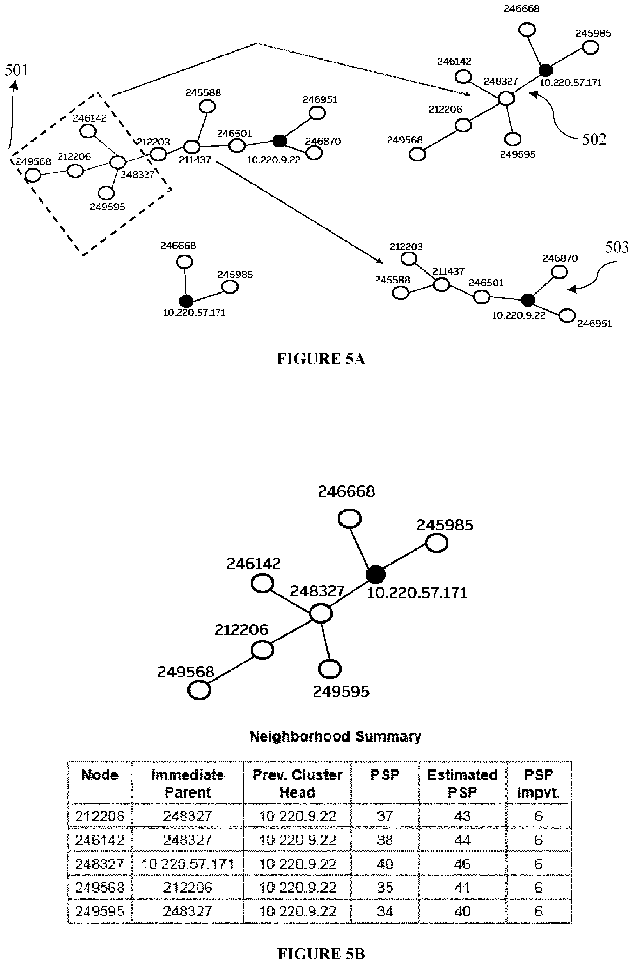

**Figure 5A and Figure 5B** show exemplary representations of cluster formation based on optimal route, in accordance with an embodiment of the invention. Particularly, Figure 5a, represents a new cluster obtained based on the optimal rank calculated for the access node device N3, as explained above. Essentially, in the new cluster, few access node devices which earlier communicated through gateway G1 (as shown in Figure 1b) are reconfigured to communicate through gateway G2. These access node devices are represented within the dashed-line rectangle in the Figure 5a.

The cluster 501 corresponds to the configuration before calculation of optimal route and the cluster 502 and cluster 503 correspond to the reconfigured cluster based on the optimal rank. The cluster 502 represents the reconfiguration where the access node devices in the dashed-rectangle change the route for data packet transmission from the gateway G1 to the gateway G2. The access node device N3 migrates with corresponding current children nodes to the gateway G2. Rest of the access node devices continue communicating through the gateway G1 and is represented by cluster 503. As a result, the packet success probability (PSP) improves in both the cluster 502 and cluster 503. The PSP corresponds to the probability of successfully received packets per packet transmission. Figure 5B shows the new reconfigured cluster and improvement in the PSP values between various access node devices. With reference to Figure 5B, the data packets are sent from the access node devices to the corresponding immediate parent access node. The PSP values in the figure 5B correspond to the packet success probability in the previous configuration. The estimated PSP values correspond to the packet success probability in the new re-configured cluster where nodes migrated from the gateway G1 to the gateway G2.

The present invention provides various advantages. The present invention allows the field devices as well as the controller/servers in the industrial plant to receive and send data from most reliable/optimal path that has been selected by studying impact from neighbours and load over large period of historical data.

The present invention leads the wireless network in the industrial plant towards an optimized structure by enabling each access node to converge towards the optimal path. Thus, as an extension, a user can also structurally optimize any selected part of the network or optimize the entire network for any given condition expected in the future.

This written description uses examples to describe the subject matter herein, including the best mode, and also to enable any person skilled in the art to make and use the subject matter. The patentable scope of the subject matter is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

**REFERRAL NUMERALS**

| **Reference Number** | **Description** |
|---|---|
| 100 | System |
| 101 | Plurality of access node devices |
| 103 | Plurality of field devices |
| 105 | Gateways |
| 107 | Server |
| 201 | I/O interface |
| 202 | Memory |
| 203 | Processor |

## Claims

1. A method of communicating process information in wireless network of industrial plant, the wireless network comprises a plurality of access nodes (101) communicatively connected with at least one gateway of a plurality of gateways (105), wherein each gateway device (105) is connected with a server (107), and wherein each access node is associated with a field device (103) of the industrial plant, the method is implemented by each of the plurality of access nodes (101), the method comprising:
calculating, a first rank for each of one or more routes at a time instance based on information associated with packet transfer, packet success probability, signal strength associated with each access nodes and noise data;
receiving, a second rank for each of the one or more routes in the wireless network from the server (107), wherein the second rank is determined by the server (107) based on parameters associated with packet delivery rate, traffic load on each route and at associated neighbouring access node, number of neighbouring access nodes, channel level data, interference levels and route condition monitored over a period of time in the wireless network;
estimating, an optimal rank for each of the one or more routes based on the corresponding first rank and the second rank; and
determining, an optimal route for communicating the process information from the associated field device (101) to the server (107) based on the estimated optimal rank of each of the one or more routes.

2. The method as claimed in claim 1, wherein the optimal rank is a function of the first rank and the second rank and a confidence factor associated with the first rank and the second rank for each route, and wherein the confidence factor is determined based on time, a pattern of quality of each route and success associated each route for data communication.

3. The method as claimed in claim 1, wherein estimating the optimal rank for each of the one or more routes comprises:
assigning weights for the first rank and the second rank associated with each access node based on number of data monitored over the period of time in the wireless network.

4. The method as claimed in claim 1 further comprising providing information about the optimal route and the optimal rank for each of the one or more routes to the server (107).

5. The method as claimed in claim 1 further comprising providing the information associated with calculation of the first rank to the server (107) for the time instance.

6. The method as claimed in claim 1, wherein the information associated with the calculation of the first rank for the one or more routes is monitored periodically by corresponding access node (101).

7. The method as claimed in claim 1 further comprising generating one or more new routes based on the estimated optimal rank.

8. An access node device (101) in a wireless network of industrial plant for communicating process information, the wireless network comprises a plurality of access nodes (101) communicatively connected with at least one gateway of a plurality of gateways (105), wherein each gateway device is connected with a server (107), and wherein each access node is associated with a field device (103) of the industrial plant, the access node (101) comprising:
an input interface (201) for receiving information from the server (107);
a memory (202);
a processor (203) for:
calculating a first rank for each of one or more routes at a time instance based on information associated with packet transfer, packet success probability, signal strength associated with each access nodes and noise data;
receiving a second rank for each of the one or more routes in the wireless network from the server (107), wherein the second rank is determined by the server (107) based on parameters associated with packet delivery rate, traffic load on each route and at associated neighbouring access node, number of neighbouring access nodes, channel level data, interference levels and route condition monitored over a period of time in the wireless network;
estimating an optimal rank for each of the one or more routes based on the corresponding first rank and the second rank; and
determining an optimal route for communicating the process information from the associated field device (101) to the server (107) based on the estimated optimal rank of each of the one or more routes.

9. The access node device as claimed in claim 8, wherein the optimal rank is a function of the first rank and the second rank and a confidence factor associated with the first rank and the second rank for each route, and wherein the confidence factor is determined based on time, a pattern of quality of each route and success associated each route for data communication.

10. The access node device as claimed in claim 8, wherein the processor (203) estimates the optimal rank for each of the one or more routes by:
assigning weights for the first rank and the second rank associated with each access node based on number of monitored over the period of time in the wireless network.
